# EUROPEAN PATENT APPLICATION

(11) **EP 1 755 206 A1**
(43) Date of publication of application: **21.02.2007**
(21) Application number: 06253439.1
(22) Date of filing: 30.06.2006
(51) Int. Cl.: H02K 7/06, H02K 5/14

(54) **Integral brush and vibration motor having the same**

(30) Priority: 19.08.2005 KR 20050076260
(71) Applicant: Samsung Electro-Mechanics Co., Ltd., Suwon-si, Kyunggi-do 443-743 (KR)
(72) Inventor: Ki, Hyun-Seung, Yeongtong-gu Suwon-si Gyeonggi-do 443744 (KR)
(74) Representative: Mounteney, Simon James

(57) **Abstract**

A vibration motor and a brush for a vibration motor are disclosed. In an embodiment of the invention, which comprises an arm having a contact part in contact with a commutator, and a securing part extending from the arm to be formed as an integrated body with the copper laminate of a printed circuit board, where the securing part is secured on the printed circuit board by a cover layer, the copper laminate and the brush are formed as an integrated body, and hence there is no need for soldering, so that an integral brush and a vibration motor having the brush may be provided that allow high productivity and allow superior reliability due to easy position adjustment of the brush.

## Description

### CROSS-REFERENCE TO RELATED APPLICATIONS

This application claims the benefit of Korean Patent Application No. 2005-76260 filed with the Korean Intellectual Property Office on Aug. 19th, 2005, the disclosure of which is incorporated herein by reference in its entirety.

### BACKGROUND

### 1. Technical Field

The present invention relates to a vibration motor and a brush used in the motor.

### 2. Description of the Related Art

The vibration motor having an eccentric rotor is currently widely used in mobile phones and PDA's, etc., as a means of creating vibration upon receipt of incoming calls. As telecommunication devices decrease in size, the demand for smaller and thinner vibration motors is also increasing.

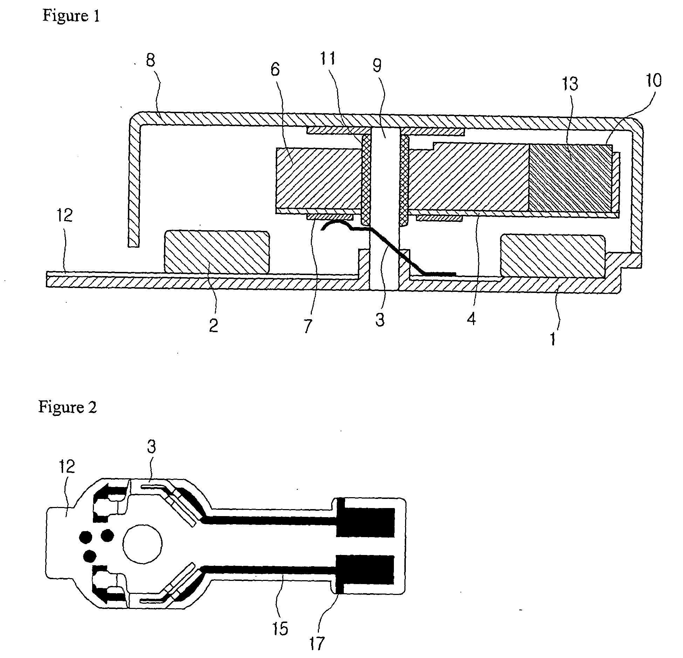

Fig. 1 is a cross-sectional view illustrating the structure of a conventional vibration motor. The conventional vibration motor has a bracket 1 at the bottom. An end of a shaft 9 is inserted and fixed to the center of the bracket 1, and the other end of the shaft 9 is secured by a case 8. The case 8 protects the other parts of the vibration motor from external interferences. A printed circuit board 12 of minute thickness is placed on the top of the bracket 1.

A multi-polar magnet 2 with alternating N, S poles is attached to the perimeter of the central printed circuit board 12. In the central cavity of the magnet 2, a pair of brushes 3 are positioned in a predetermined angle with the lower ends attached to the printed circuit board 12. A bearing 11 is inserted onto a predetermined position of the shaft 9, and an eccentric rotor 10 is inserted along the perimeter of the bearing 11. Flat commutators 7 that are in contact with the brushes 3 are positioned on the bottom of the rotor 10.

Also located on the eccentric rotor 10 are wound coils 6 and a weight 13 for increasing the eccentricity of the rotor. The wound coils 6 and the commutators 7 are electrically connected to generate an electrical field when a current is supplied through the brushes 3. The electrical field thus generated and the magnetic field generated by the magnet 2 interact to create an electromagnetic force which operates the rotor 10. The weight 13 is positioned eccentrically on the rotor 10 to increase the eccentricity of the rotor 10.

The brushes 3 keep in contact with the commutators 7 and deliver a current supplied from an outside source through the commutators to the wound coils 6. Since the commutators 7 that are in contact with the brushes 3 rotate simultaneously with the rotor 10, the brushes 3 are required to keep in electrical contact with the commutators even when the rotor 10 is rotating. If the contact is lost between the brushes 3 and the commutators 7, the vibration motor cannot function, causing a malfunction of the entire motor.

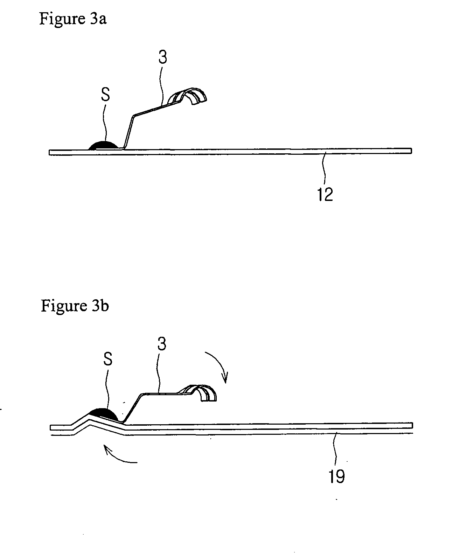

Fig. 2 is a plan view illustrating brushes 3 attached to a printed circuit board 12 with solder S in a conventional vibration motor, and Fig. 3 a is a schematic diagram of the printed circuit board 12 with secured brushes 3, as seen from the side. Also, Fig. 3b is a schematic diagram illustrating a deformation of the brushes and a portion of the board.

Referring to Figs. 2 and 3a, conventional brushes 3 are formed independently of the printed circuit board 12 and are attached to the conductive patterns 15 of the printed circuit board 12 with solder S. The conductive patterns 15 extend outside the case 8 and connect to the plating parts 19, while the plating parts 19 connect to outside lead wires (not shown), etc. The printed circuit board 12 is secured to the bottom of the bracket 1 with double-sided tape 19, etc.

However, since conventional brushes 3 are attached to the copper laminate 15 with solder S, the assembly process is made extremely complicated, with not only low productivity but also high defect rate. In addition, because it is difficult to accurately set the height of the brushes during the soldering process, the brushes are damaged by friction etc. between the brushes and commutators, so that the durability of the motor is decreased.

Also, the soldering means for securing the brushes 3 on a flexible board 12 may cause defects due to contamination on the brushes and flexible board and unsuitable soldering conditions, and solder balls created during the soldering to contaminate the surroundings may cause short circuiting between two brushes. Further, as seen in Figs. 2 and 3a, since the area for soldering is very narrow, and the brushes 3 are secured on a soft flexible board, the continued load on the brushes causes a deformation, as illustrated Fig. 3b, in which the securing part of a brush 3 and the flexible board 12 around it is lifted up. The deformation of the brush 3 such as that in Fig. 3b lowers the ability of the brushes 3 and commutators 7 to maintain contact, whereby the quality of the vibration motor is reduced.

Also, the flexible board, i.e. the printed circuit board 12, has plating lines 17 exposed to the exterior within a product, where such plating lines 17 may cause short-circuiting with surrounding conductive materials when placed in contact. Moreover, the flexible board incurs high material costs, due to a complicated manufacturing process involving several procedures.

### SUMMARY

The present invention aims to provide an integral brush and a vibration motor having the brush which not only provide a simple work process but also lengthen the duration of the motor by reducing the defect rate.

Another objective of the invention is to provide an integral brush and a vibration motor having the brush which do not require a soldering process, so that there is no contamination of the surroundings due to solder balls and no risk of short-circuiting between brushes due to solder balls.

Still another objective of the invention is to provide an integral brush and a vibration motor having the brush, in which the areas for securing the brushes are sufficiently wide, so that there is very low risk of the insulation film between the bracket and brushes peeling, thus allowing very little tension changes in the brushes, and thereby ensuring a reliable quality of the vibration motor.

Yet another objective of the invention is to provide an integral brush and a vibration motor having the brush which do not comprise plating lines, so that there is no possibility of short-circuiting between plating lines and surrounding components.

Still another objective of the invention is to provide an integral brush and a vibration motor having the brush which do not use expensive flexible boards and use only insulation films to reduce manufacturing costs.

Yet another objective of the invention is to provide an integral brush and a vibration motor having the brush, with which the positions of the brushes may be set with precision.

One aspect of the present invention provides an integral brush comprising an arm having a contact part in contact with a commutator, and an extension part extending from the arm to be secured onto a bracket of a vibration motor and extending to a position for connecting to a lead wire, in which the arm and the extension part are formed as an integrated body.

In such an embodiment, the copper laminate and the brushes are formed as an integrated body, so that it is not necessary to perform soldering for attaching the brushes onto the copper laminate. Thus, the present invention may provide an integral brush of a vibration motor that allows high productivity and allows superior reliability due to easy position adjustment of the brush. Also, since there is no risk of solder balls created by soldering, short-circuits may be prevented between brushes. Further, an integral brush may be provided in which the area for securing the brush is sufficiently wide, so that there is very low risk of the insulation film between the bracket and brushes peeling, thus allowing very little tension changes in the brush, and thereby ensuring a reliable quality of the vibration motor. Also, an integral brush may be provided which does not have plating lines, so that there is no possibility of short-circuiting between plating lines and surrounding components, and which uses only an insulation film instead of an expensive flexible board to reduce manufacturing costs.

The brush may be formed as a pair of brushes having symmetrical shapes. Also, the arm may be composed of a plurality of segments. The extension part may be secured to the bracket by a lower insulation film, while an upper insulation film may be attached at the upper portion of the extension part, to maintain insulation from the exterior.

One aspect of the present invention provides a vibration motor having the integral brush, comprising a bracket having a bracket groove, a case joining with the bracket to form an outer body and having a case groove, a shaft having each end inserted and secured in the bracket groove and the case groove, an eccentric rotor inserted onto the shaft and having a commutator which receives a current through the integral brush and transfers it to a coil, and a magnet secured on the bracket in a position facing the commutator.

The eccentric rotor may comprise a hard board having an asymmetrical shape and a weight positioned on the hard board. The commutator may be formed on the lower surface of the hard board, and the coil and the weight may be positioned on the hard board by means of a securing member.

The eccentric rotor may preferably be inserted onto the shaft with a bearing as a medium. Also, the eccentric rotor may preferably be supported by a washer inserted onto the shaft. The weight may preferably be made of tungsten. The securing member may preferably be made of an injection-molded product. The coil may preferably be a pattern coil. The weight may preferably have a fan shape with a central angle of 180° or less. The weight may preferably be placed on the outermost perimeter of the hard board.

### BRIEF DESCRIPTION OF THE DRAWINGS

These and/or other aspects and advantages of the present invention will become apparent and more readily appreciated from the following description of the embodiments, taken in conjunction with the accompanying drawings of which:
Fig. 1 is a cross-sectional view of a conventional vibration motor.
Fig. 2 is a plan view illustrating brushes attached to the board in a conventional vibration motor.
Fig. 3 a is a schematic diagram illustrating brushes attached to the board in a conventional vibration motor.
Fig. 3b is a schematic diagram illustrating a deformation of the brushes and a portion of the board in a conventional vibration motor.
Fig. 4 is a plan view of brushes integrated with the board according to an embodiment of the present invention.
Fig. 5 is a cross-sectional view of brushes integrated with the board according to an embodiment of the present invention.
Fig. 6 is a cross-sectional view of a vibration motor having integrated brushes according to an embodiment of the present invention.

### DETAILED DESCRIPTION

Preferred embodiments of the integral brush and a vibration motor having the same according to the present invention will now be described in more detail with reference to the accompanying drawings.

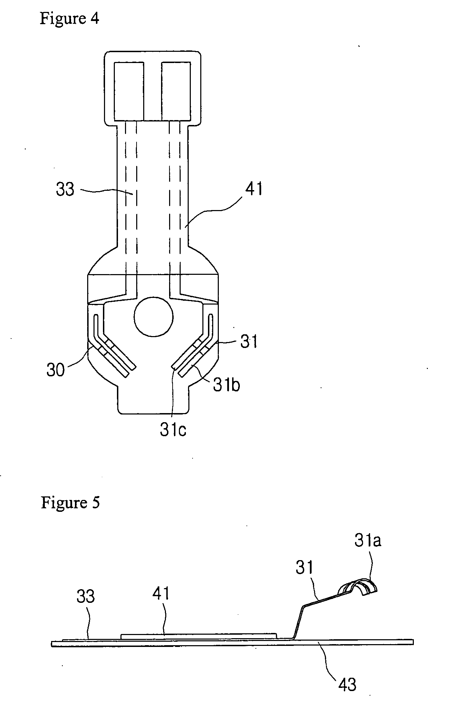

Fig. 4 is a plan view of brushes according to an embodiment of the present invention, and Fig. 5 is a cross-sectional view of the configuration of Fig. 4. As illustrated in Figs. 4 and 5, a brush 30 according to an embodiment of the invention comprises an arm 31 and an extension part 33 extending from the arm 31.

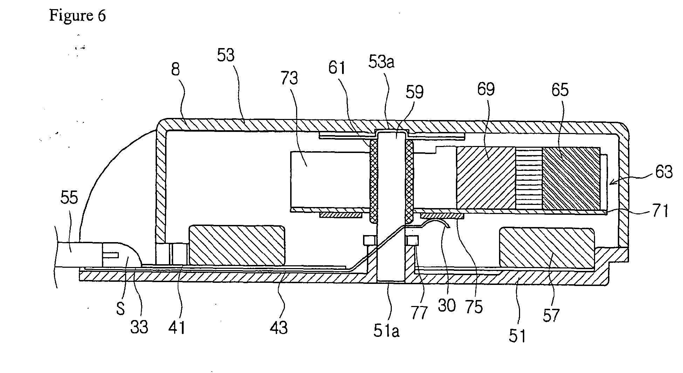

The arm 31, as illustrated in Fig. 4, has a shape bent towards the inside. At one end of the arm 31, as illustrated in Fig. 5, there is a contact part 31 a having the shape of an arc. The contact part 31a, as illustrated in Fig. 6, is in contact with the lower surface of a commutator 75.

The arm 31 may be composed of a plurality of segments 31b, 31c. Thus, even if one segment is not in contact with the commutator, another segment may be in contact with the commutator, so that the brush may be provided with superior reliability.

A repetitive fatigue load is applied on the arm 31 due to the rotation of the rotor, where such fatigue load may disengage the connection between the arm 31 and the commutator. When the connection is disengaged or is poor between the arm 31 and the commutator, the operation of the motor may be poor. Therefore, the brush 30 is preferably formed of a material superior in terms of electrical and mechanical properties, such as MX215, etc. Also, it is preferable to allow each segment 31b, 31c to be in contact independently, by forming a long slot between the segments 31b, 31c. That is, the longer the slot formed between the segments 31b, 31c, the better may each of the segments 31b, 31c act independently, so that even if one segment is not in contact with the commutator, the other segment may be in contact with the commutator.

The extension part 33 extends from the arm 31 and is secured on the bracket by the lower insulation film 43 of the vibration motor. The lower insulation film 43 not only secures the extension part 33 on the bracket, but also acts as insulation between the bracket and the extension part 33.

The extension part 33 is formed as an integrated body with the arm 31, and one end of the extension part 33 is connected to a lead wire outside the vibration motor by means of solder, etc. As the arm 31 and the extension part 33 are thus formed as an integrated body, in embodiments of the present invention, there is no need for soldering to secure the brush. Thus, an aspect of the present invention may provide an integral brush for a vibration motor that allows high productivity and allows superior reliability due to easy position adjustment of the brush.

An upper insulation film 41 is placed on the extension part 33. The upper insulation film 41 not only provides electrical insulation between the extension part 33 and other components of the vibration motor, but also firmly secures the extension part 33.

Since the entire extension part 33 is secured on the bracket in embodiments of the present invention, the areas for securing the brushes are sufficiently wide, so that not only is there very low risk of the insulation film attached between the bracket and brushes peeling, but also there is little risk of disengaged connection between the brush 30 and the commutator. Also, as the extension part 33 replaces the expensive flexible board, manufacturing costs may be reduced.

Fig. 6 is a cross-sectional view of a vibration motor having integrated brushes according to an embodiment of the present invention.

Referring to Fig. 6, the vibration motor comprises a bracket 51 and a case 53 joined to the bracket 51 which form an outer body and protects the components inside, integral brushes 30 secured to the bottom of the bracket 51, lead wires 55 electrically connected to the extension parts 33 of the brushes 30, a circular magnet 57 attached to the bottom of the bracket 51, a shaft 59 inserted and secured in the bracket 51 and case 53, a bearing 61 inserted onto the shaft, and an eccentric rotor 63 inserted onto the shaft 59 using the bearing 61 as a medium which induces vibration by its rotation.

In the center of the bracket 51, as illustrated in Fig. 6, there is formed a bracket groove 51a into which the shaft 59 is inserted. The lower end of the shaft 31 is inserted and secured in the bracket groove 51a. The lower insulation film 43 is positioned on the upper surface of the bracket 51, and a donut-shaped magnet 57 is positioned on the lower insulation film 43. The bracket 51 joins with the case 53.

In the center of the case 53 is formed a case groove 53a into which the shaft 59 is inserted. The upper end of the shaft 59 is inserted and secured in the case groove 53a. There is a particular amount of displacement between the lower surface of the case 53 and the eccentric rotor 63.
The magnet 57 is positioned on the upper surface of the bracket 51. The magnet 57 has the shape of a donut, and within the inside space are positioned the brushes 30 and the shaft 59. The magnet 57 is magnetized to have at least two poles. To increase the electromagnetic force on the eccentric rotor 63, the magnet 57 is preferably made to have four or more poles. The magnet 57 is magnetized by alternating N/S poles with equal magnitudes. The magnet 57 forms a magnetic field, which, together with electrical field generated by the coil 69 of the eccentric rotor 63, generates an electromagnetic force to operate the eccentric rotor 63.

The upper and lower ends of the shaft 59 are forced into and secured in the case groove 53a and bracket groove 51a, respectively, and support the eccentric rotor 63 while the eccentric rotor 63 is rotated. A bearing 61, which allows smoother rotation of the eccentric rotor 63, is inserted onto a predetermined position on the shaft 59 and secured. The bearing 61 is supported by a washer 77 that is also inserted onto the shaft 59 and secured.

The washer 77 is inserted onto the shaft 59 and secured. The washer 77 supports the eccentric rotor 63 while in contact with the lower surface of the eccentric rotor 63 or with the bearing 61. Therefore, even when there is an external impact applied on the vibration motor, it is not moved from its original position, because the eccentric rotor 63 is supported by the washer 77.

The eccentric rotor 63 is inserted onto the shaft 59, with the bearing 61 as a medium, and is rotated. The eccentric rotor 63 is eccentric about the through-hole by which it is inserted onto the shaft 59, so as to induce eccentricity via the rotation of the eccentric rotor 63 for generating vibration. The eccentric rotor 63 is composed of a hard board 71, a weight 65 secured on the hard board 71, a coil 69, and a securing member 73.

The hard board 71 supports the weight 65, coil 69, and securing member 73, and on its reverse side are attached the commutators 75. The commutators 75 are in contact with the brushes 30, and at the same are also connected to the coil 69. Thus, the commutators 75 are pathways through which the current inputted via the brushes 30 may be inputted to the coil 69. The commutators 75 have a composition where metal laminates, such as copper, are arranged in particular intervals.

The weight 65 is secured on the hard board 71 by means of the securing member 73. The weight 65 is generally manufactured from tungsten, etc., which has a large mass, and is used to further increase the eccentricity of the eccentric rotor 63 when the eccentric rotor 63 is rotated. The weight 65 is preferably positioned on the outermost perimeter of the eccentric rotor 63 to further increase the eccentricity of the eccentric rotor 63. Also, when a pattern coil is used for the coil 69, the volume occupied by the coil may be reduced, so that the weight 65 may have a greater size, thereby further increasing the amount of vibration of the vibration motor.

The coil 69 is secured on the hard board 71 by means of the securing member 73. As the coil 69 is connected with the commutators 75, the electric current is inputted through the commutators 75. The coil 69 may be a wound coil or a pattern coil.

A pattern coil is a patterned form of coil produced by photolithography or thick film processes. By forming the coil 69 as a pattern coil, its volume may be reduced. Also, unlike wound coils, it has neither a complicated manufacturing process nor a high defect rate, so that productivity may be improved.

The securing member 73 secures the coil 69 and the weight 65 on the hard board 71. The securing member 73 may be common adhesive, but plastic resin may also be used. When a plastic injection-molded product is used for the securing member 73, the securing member 73 may be produced readily by insert injection molding.

Preferably, the central angle of the securing member 73 does not exceed 180°. This is because when the central angle exceeds 180°, the amount of eccentricity is cancelled by the amount of mass corresponding to the excess portions. Forming the securing member 73 to have a height equal to the thickness of the weight 65 may reduce the thickness of the eccentric rotor 63, while a height greater than the thickness of the weight 65 may further increase the eccentricity and firmly secure the weight 65.

The brushes 30 are secured on the upper surface of the bracket 51 by the lower insulation film 43. The contact parts 31a of the brushes 30 are in contact electrically with the commutators 75. Also, the end portions of the extension parts 33 are exposed to the exterior of the case 53 and connected to lead wires 55 by solder, etc.

Thus, an integral brush and a vibration motor having the brush may be provided which not only provide a simple work process but also lengthen the duration of the motor by reducing the defect rate.

Also, an integral brush and a vibration motor having the brush may be provided which do not require a soldering process, so that there is no contamination of the surroundings due to solder balls and no risk of short-circuiting between brushes due to solder balls.

An integral brush and a vibration motor having the brush may be provided, in which the areas for securing the brushes are sufficiently wide, so that there is very low risk of the insulation film between the bracket and brushes peeling, thus allowing very little tension changes in the brushes, and thereby ensuring a reliable quality of the vibration motor.

An integral brush and a vibration motor having the brush may be provided which do not comprise plating lines, so that there is no possibility of short-circuiting between plating lines and surrounding components.

Further, an integral brush and a vibration motor having the brush may be provided which do not use expensive flexible boards and use only insulation films to reduce manufacturing costs.

An integral brush and a vibration motor having the brush may be provided, with which the positions of the brushes may be set with precision.

While the above description has pointed out novel features of the invention as applied to various embodiments, the skilled person will understand that various omissions, substitutions, and changes in the form and details of the device or process illustrated may be made without departing from the scope of the invention. Therefore, the scope of the invention is defmed by the appended claims rather than by the foregoing description. All variations coming within the meaning and range of equivalency of the claims are embraced within their scope.

## Claims

1. An integral brush, comprising:
an arm having a contact part in contact with a commutator; and
an extension part extending from the arm to be secured onto a bracket of a vibration motor and extending to a position for connecting to a lead wire,
wherein the arm and the extension part are formed as an integrated body.

2. The integral brush of claim 1, wherein the brush is formed as a pair of brushes having symmetrical shapes.

3. The integral brush of claim 1, wherein the arm is composed of a plurality of segments.

4. The integral brush of claim 1, wherein the extension part is secured to the bracket by a lower insulation film.

5. The integral brush of claim 1, wherein an upper insulation film is attached at the upper portion of the extension part.

6. A vibration motor having the integral brush according to any one of claims 1 to 5, comprising:
a bracket having a bracket groove;
a case joining with the bracket to form an outer body and having a case groove;
a shaft having each end inserted and secured in the bracket groove and the case groove;
an eccentric rotor inserted onto the shaft and having a commutator, the commutator receiving a current through the integral brush and transferring to a coil; and
a magnet secured on the bracket in a position facing the commutator.

7. The vibration motor of claim 6, wherein
the eccentric rotor comprises a hard board having an asymmetrical shape; and a weight positioned on the hard board,
the commutator is formed on the lower surface of the hard board, and
the coil and the weight are positioned on the hard board by means of a securing member.

8. The vibration motor of claim 6, wherein the eccentric rotor is inserted onto the shaft with a bearing as a medium.

9. The vibration motor of claim 6, wherein the eccentric rotor is supported by a washer inserted onto the shaft.

10. The vibration motor of claim 7, wherein the weight is made of tungsten.

11. The vibration motor of claim 7, wherein the securing member is made of an injection-molded product.

12. The vibration motor of claim 7, wherein the coil is a pattern coil.

13. The vibration motor of claim 7, wherein the weight has a fan shape with a central angle of 180° or less.

14. The vibration motor of claim 7, wherein the weight is placed on the outermost perimeter of the hard board.
